(19) Europäisches Patentamt

European Patent Office

Office européen des brevets

(11) EP 1 435 470 B1

(12) **EUROPEAN PATENT SPECIFICATION**

(45) Date of publication and mention
of the grant of the patent:
**02.08.2006 Bulletin 2006/31**

(51) Int Cl.:
***F16D 66/02*** *(2006.01)*

(21) Application number: **03104996.8**

(22) Date of filing: **30.12.2003**

(54) **Method and device for determining wear of composite material brake disks of a road vehicle**

Verfahren und Vorrichtung zur Bestimmung von Verschleiss einer Bremsscheibe aus Verbundwerkstoff eines Pkws

Méthode et dispositif de détermination d'usure de disques de freins en matériau composite d'un véhicule

(84) Designated Contracting States:
**DE ES FR GB SE**

(30) Priority: **02.01.2003 IT BO20030003**

(43) Date of publication of application:
**07.07.2004 Bulletin 2004/28**

(73) Proprietor: **FERRARI S.p.A.**
**41100 Modena (IT)**

(72) Inventors:
• **Cavanna, Martino**
**20059 Vimercate (IT)**

• **Visconti, Amedeo**
**10138 Torino (IT)**

(74) Representative: **Jorio, Paolo et al**
**Studio Torta S.r.l.**
**Via Viotti, 9**
**10121 Torino (IT)**

(56) References cited:
**WO-A-02/12043        FR-A- 2 794 825**
**US-A- 5 668 529**

**Description**

The present invention relates to a method and device for determining wear of composite material brake disks of a road vehicle.

At present, all road racing vehicles (cars and motorcycles) are equipped with metal-disk brakes. On the basis of experience acquired in racing applications, disk brakes with disks made of composite material (in particular, composite ceramic material such as carbon - so-called "CCM disks") have been proposed, by providing for improved braking performance as compared with metal disks.

In actual use, however, composite material brake disks have been found to deteriorate rapidly, with consequent impairment in mechanical characteristics and fatigue resistance. In particular, over and above a given wear threshold, composite material brake disks fail to ensure safe operation, so that, in a road vehicle equipped with such disks, it is imperative that wear of the disks be determined accurately to inform the driver promptly of the need to replace the disks.

To determine wear of a metal brake disk, it has been proposed, as described for example in Patent US6345700, to use a sensor fitted to and for measuring the thickness of the disk. This solution, however, cannot be applied to composite material brake disks, on account of the sensors not normally having the necessary wear-detecting precision. Moreover, the sensors are relatively expensive, by being called upon to measure wear of a component - the brake disk - rotating at high speed in a dirty environment (further compounded by the dust produced in use by composite material brake disks).

FR2794825 discloses a method of prevention of excessive wear of motor vehicle brake linings (i.e. pads); the method is implemented on a computer which evaluates physical parameters from energy generated during braking to create a model of each braking operation. A value for incremental wear is deduced from a correspondence table and the parameter values; accumulated incremental wear is compared to a threshold, and a warning signal emitted when the threshold is exceeded. The document WO-0212043, considered to represent the closest prior art, discloses a method and a system for determining wear of composite material brake discs wherein the calculated wear value of the disc is based on values from plural sensor signals like the one from brake temperature sensors.

It is an object of the present invention to provide a method and device for determining wear of composite material brake disks of a road vehicle, which are cheap and easy to implement and, at the same time, provide for eliminating the aforementioned drawbacks.

According to the present invention, there is provided a method and a device of determining wear of composite material brake disks of a road vehicle, as claimed in the attached claims.

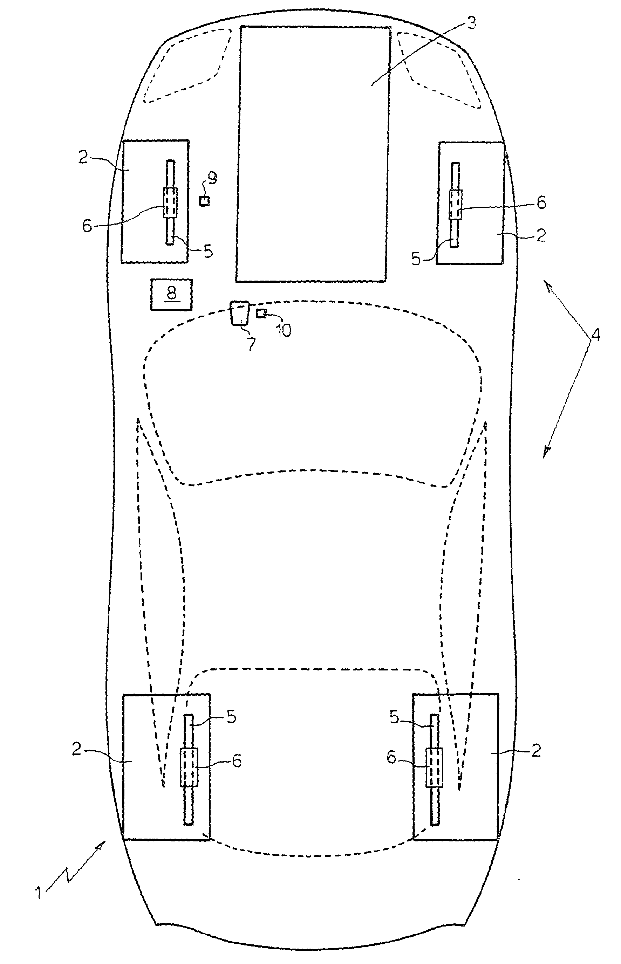

A non-limiting embodiment of the present invention will be described by way of example with reference to the accompanying drawing, which shows a schematic view of a vehicle featuring a central control unit operating according to the method of the present invention.

Number 1 in the accompanying drawing indicates a vehicle having four wheels 2 (two front wheels and two rear drive wheels), and comprising a front internal combustion engine 3, and a brake system 4 having four brake disks 5, each of which is located inside a respective wheel 2, and is fitted to a corresponding calliper 6 controlled by a brake pedal 7 in the passenger compartment of vehicle 1.

Brake disks 5 of vehicle 1 are made of composite material, in particular carbon (composite ceramic material), and brake system 4 comprises a central control unit 8 for determining and storing an estimate of the wear of brake disks 5, so as to generate a driver signal when the wear of brake disks 5 exceeds a given safety threshold.

Central control unit 8 is connected to a speed sensor 9, which is fitted to one of front wheels 2 to real-time detect the value $v(t)$ of the travelling speed of the vehicle, and transmit value $v(t)$ to a speedometer on the instrument panel (not shown in detail) of vehicle 1. Central control unit 8 is also connected to a brake sensor 10, which is fitted to brake pedal 7 to determine operation of brake pedal 7 to command the stop lights (not shown in detail) of vehicle 1. It is important to note that both speed sensor 9 and brake sensor 10 are normally already provided on vehicle 1. Central control unit 8 is therefore cheap and easy to install, by operating with existing signals on vehicle 1.

Central control unit 8 stores a total wear value U of brake disks 5, which is reset whenever brake disks 5 are changed.

In actual use, central control unit 8 constantly monitors the speed $v(t)$ of vehicle 1 with a given control frequency, to determine all the decelerations of vehicle 1, i.e. all the situations in which the speed $v(t)$ of vehicle 1 falls from an initial value V1 to a final value V2. At each deceleration of vehicle 1 brought about by actual operation of brake system 4 (as determined by brake sensor 10), central control unit 8 determines an instantaneous wear contribution u of brake disks 5 during deceleration, and updates the total wear value U of brake disks 5 by adding the instantaneous wear contribution u of brake disks 5 during deceleration to the previous total wear value U. The central control unit therefore ignores any deceleration of vehicle 1 not brought about by actual operation of brake system 4, but by friction on vehicle 1 (mainly engine braking, tyre-road friction, and drag).

The total wear value U of brake disks 5 preferably comprises a total wear value Ua of the front brake disks 5, and a total wear value Up of the rear brake disks 5; and the instantaneous wear contribution u of brake disks 5 during deceleration is divided between the two total values Ua and Up as a function of a constant distribution ratio, or a variable distribution ratio (typically calculated at each deceleration as a function of the initial and final speed values V1 and V2 of the deceleration).

To determine the actual value of the instantaneous wear contribution u of brake disks 5 during deceleration brought about by actual operation of brake system 4, central control unit 8 calculates the kinetic energy differential DEk of vehicle 1 induced by deceleration; determines, as a function of the kinetic energy differential DEk of vehicle 1, an instantaneous value Ed of the energy dissipated by brake disks 5 during deceleration; and determines the value of the instantaneous wear contribution u of brake disks 5 during deceleration on the basis of the value Ed of the energy dissipated by brake disks 5 during deceleration. The kinetic energy differential DEk of vehicle 1 induced by deceleration is calculated according to the following equation:

$$DEk = 0.5 * M * (V1^2 - V2^2)$$

where V1 is the initial speed of vehicle 1, V2 is the final speed of vehicle 1 (lower than speed V1), and M is the mass of vehicle 1.

The instantaneous value Ed of the energy dissipated by brake disks 5 during deceleration is typically assumed equal to the kinetic energy differential DEk of vehicle 1. The instantaneous wear contribution u of brake disks 5 during deceleration is determined by multiplying the value Ed of the energy dissipated by brake disks 5 during deceleration by a multiplication constant K ranging between 0 and 1; and the value of constant K is calculated experimentally by means of road and/or track tests.

In an alternative embodiment, at each deceleration, an energy contribution caused by the braking action of friction on vehicle 1 is determined; and the instantaneous value Ed of the energy dissipated by brake disks 5 during deceleration is assumed equal to the difference between kinetic energy differential DEk and the energy contribution caused by the braking action of friction on vehicle 1. By way of example, the energy contribution caused by the braking action of friction on vehicle 1 may be determined as a function of the speed of vehicle 1, since friction due to drag substantially depends on speed, and as a function of engine speed, since engine braking substantially depends on the speed of the engine.

Wear of brake disks 5 has been found to depend both on the energy Ed dissipated by brake disks 5, and on the operating temperature of brake disks 5, i.e. on the way in which energy is dissipated. In other words, the same amount of dissipated energy Ed produces a different amount of wear on the braking area, depending on whether it is dissipated during extreme (typically on-track) use of vehicle 1, in which brake disks 5 reach high temperatures (of over 400/500°C), or during normal use (typically on public highways). More specifically, the same amount of dissipated energy Ed produces much greater wear of the braking area during extreme, as opposed to normal, use of vehicle 1.

For these reasons, in a preferred embodiment, constant K may assume two different values corresponding respectively to normal and extreme use of vehicle 1. To distinguish between the type of use of vehicle 1, a braking mode assessment is made, and the instantaneous wear contribution u of brake disks 5 during deceleration is determined on the basis of the value Ed of the energy dissipated by brake disks 5 during deceleration, and on the basis of the braking mode assessment, which is obviously directly related to the temperature of brake disks 5 during deceleration.

The braking mode assessment is made on the basis of a mean value of kinetic energy differential DEk within a given time interval, which typically ranges between 0,1 and 5 seconds and may cover a number of successive decelerations brought about by a number of successive operations of brake system 4. If the mean value of kinetic energy differential DEk exceeds a given threshold, this means vehicle 1 is undergoing a series of sharp, repeated decelerations, i.e. is being used in extreme conditions, and constant K assumes a higher value. Conversely, if the mean value of kinetic energy differential DEk is below the given threshold, this means vehicle 1 is not undergoing a series of sharp, repeated decelerations, i.e. is being used in normal conditions, and constant K assumes a lower value.

In alternative embodiments, constant K may assume one value, regardless of how vehicle 1 is used, or may assume more than two values as a function of the braking mode assessment, and in particular as a function of the mean value of kinetic energy differential DEk.

Tests confirm the ability of central control unit 8, as described above, to determine the total wear value U of brake disks 5 extremely accurately, thus enabling a prompt, accurate driver warning signal indicating the need to change brake disks 5.

**Claims**

1. A method of determining wear of composite material brake disks (5) of a road vehicle (1) and comprising the following steps of:

calculating, at each deceleration of the vehicle (1), a kinetic energy differential (DEk) of the vehicle (1) induced by deceleration;

determining, as a function of the kinetic energy differential (DEk) of the vehicle (1), an instantaneous value (Ed) of an energy dissipated by the brake disks (5) during deceleration;

determining a mean value of the kinetic energy differential (DEk) of the vehicle within a given time interval;

determining, at each deceleration of the vehicle (1), the temperature of the brake disks (5) during deceleration as a function of the mean value of the kinetic energy differential (DEk);

determining, on the basis of the value (Ed) of the energy dissipated by the brake disks (5) during deceleration and on the basis of the determined temperature of the brake disks (5) during deceleration, an instantaneous wear contribution (u) of the brake disks (5) during deceleration; and

updating a total wear value (U) of the brake disks (5) by adding the instantaneous wear contribution (u) of the brake disks (5) during deceleration to the previous total wear value (U).

2. A method as claimed in Claim 1, wherein, upon deceleration of the vehicle (1), a corresponding instantaneous value (Ed) of the energy dissipated by the brake disks (5) during deceleration is only determined if the braking action of the brake system (4) of the vehicle (1) is actually used during deceleration.

3. A method as claimed in Claim 1 or 2, wherein, at each deceleration, an energy contribution caused by the braking action of friction on the vehicle (1) is determined; the energy contribution caused by the braking action of friction on the vehicle (1) being taken into account to determine the instantaneous value (Ed) of the energy dissipated by the brake disks (5) during deceleration as a function of the kinetic energy differential (DEk) of the vehicle (1).

4. A method as claimed in one of Claims 1 to 3, wherein determining the estimation of the temperature of the brake disks (5) during deceleration comprises performing a braking mode assessment; the instantaneous wear contribution (u) of the brake disks (5) during deceleration being determined on the basis of the value (Ed) of the energy dissipated by the brake disks (5) during deceleration, and on the basis of the braking mode assessment as indication of the estimation of the temperature of the brake disks (5) during deceleration.

5. A method as claimed in Claim 4, wherein the braking mode assessment is determined as a function of the mean value of the kinetic energy differential (DEk).

6. A method as claimed in one of Claims 1 to 5, wherein the instantaneous value (Ed) of the energy dissipated by the brake disks (5) during deceleration is assumed equal to the kinetic energy differential (DEk) of the vehicle (1); the instantaneous wear contribution (u) of the brake disks (5) during deceleration being determined by multiplying the value (Ed) of the energy dissipated by the brake disks (5) during deceleration by a multiplication constant (K) ranging between 0 and 1.

7. A method as claimed in Claim 6, wherein the multiplication constant (K) assumes different values as a function of the mean value of the kinetic energy differential (DEk).

8. A method as claimed in Claim 6, wherein the multiplication constant (K) may assume two different values corresponding respectively to normal use of the vehicle (1) and extreme use of the vehicle (1).

9. A method as claimed in Claim 7 or 8, wherein the time interval in which to determine the mean value of the kinetic energy differential (DEk) of the vehicle (1) ranges between 0,1 and 4 seconds.

10. A method as claimed in one of Claims 1 to 9, wherein the total wear value (U) of the brake disks (5) is divided between the front brake disks (5) and the rear brake disks (5) as a function of a constant distribution ratio.

11. A method as claimed in one of Claims 1 to 9, wherein the total wear value (U) of the brake disks (5) comprises a total wear value (Ua) of the front brake disks (5), and a total wear value (Up) of the rear brake disks (5); the instantaneous wear contribution (u) of the brake disks (5) during deceleration being divided between the two total values (Ua, Up) as a function of a variable distribution ratio.

12. A method as claimed in Claim 11, wherein the distribution ratio is calculated at each deceleration as a function of the initial and final speed values (V1, V2) of the deceleration.

13. A method as claimed in one of Claims 1 to 12, wherein a signal is generated when the total wear value (U) of the brake disks (5) exceeds a given threshold.

14. A device for determining wear of composite material brake disks (5) of a road vehicle (1), the device implementing the method as claimed in Claims 1 to 13.


**Patentansprüche**

1. Verfahren zum Bestimmen von Verschleiß von Bremsscheiben (5) aus Verbundwerkstoff eines Straßenfahrzeugs (1), umfassend die folgenden Schritte:

    Berechnen bei jeder Verzögerung des Fahrzeugs (1) einer Differenz (DEk) kinetischer Energie des Fahrzeugs (1) induziert durch die Verzögerung;
    Bestimmen eines momentanen Werts (Ed) einer durch die Bremsscheiben (5) während der Verzögerung verbrauchten Energie in Abhängigkeit von der Differenz (DEk) der kinetischen Energie des Fahrzeugs (1);
    Bestimmen eines mittleren Werts der Differenz (DEk) der kinetischen Energie des Fahrzeugs innerhalb eines gegebenen Zeitintervals;
    Bestimmen der Temperatur der Bremsscheiben (5) während der Verzögerung in Abhängigkeit des mittleren Werts der Differenz (DEk) der kinetischen Energie bei jeder Verzögerung des Fahrzeugs (1);
    Bestimmen eines momentanen Verschleißbeitrags (u) der Bremsscheiben (5) während der Verzögerung auf Grundlage des Werts (Ed) der durch die Bremsscheiben (5) während der Verzögerung verbrauchten Energie und auf Grundlage der während der Verzögerung bestimmten Temperatur der Bremsscheiben (5); und
    Aktualisieren eines Gesamtverschleißwerts (U) der Bremsscheiben (5) durch Addieren des momentanen Verschleißbeitrags (u) der Bremsscheiben (5) während der Verzögerung zu dem vorhergehenden Gesamtverschleißwert (U).

2. Verfahren nach Anspruch 1, in dem nach Verzögerung des Fahrzeugs (1) ein entsprechender momentaner Wert (Ed), der durch die Bremsscheiben (5) während der Verzögerung verbrauchten Energie nur bestimmt wird, wenn die Bremsaktion des Bremssystems (4) des Fahrzeugs (1) tatsächlich während der Verzögerung verwendet wurde.

3. Verfahren nach Anspruch 1 oder 2, in dem bei jeder Verzögerung ein Energiebeitrag bestimmt wird, der durch die Bremsaktion durch Reibung auf das Fahrzeug (1) verursacht wird; wobei der durch die Bremsaktion durch Reibung auf das Fahrzeug (1) verursachte Energiebeitrag in Betracht gezogen wird, um den momentanen Wert (Ed) der verbrauchten Energie durch die Bremsscheiben (5) während der Verzögerung in Abhängigkeit der Differenz (DEk) der kinetischen Energie des Fahrzeugs (1) zu bestimmen.

4. Verfahren nach einem der Ansprüche 1 bis 3, in dem die Schätzung der Temperatur der Bremsscheiben (5) während des Verzögerns ein Ausführen einer Bremsbetriebsartprüfung umfaßt; wobei der momentane Verschleißbeitrag (u) der Bremsscheiben (5) während der Verzögerung auf Grundlage des Werts (Ed) der verbrauchten Energie durch die Bremsscheiben (5) während der Verzögerung und auf Grundlage der Bremsbetriebsartprüfung als Hinweis auf die Schätzung der Temperatur der Bremsscheiben (5) während der Verzögerung bestimmt wird.

5. Verfahren nach Anspruch 4, in dem die Bremsbetriebsartprüfung in Abhängigkeit vom mittleren Wert der Differenz (DEk) der kinetischen Energie bestimmt wird.

6. Verfahren nach einem der Ansprüche 1 bis 5, in dem der momentane Wert (Ed) der verbrauchten Energie durch die Bremsscheiben (5) während der Verzögerung als gleich zur Differenz (DEk) der kinetischen Energie des Fahrzeugs (1) angenommen wird; wobei der momentane Verschleißbeitrag (u) der Bremsscheiben (5) während der Verzögerung durch Multiplizieren des Werts (Ed) der verbrauchten Energie durch die Bremsscheiben (5) während der Verzögerung mit einer zwischen 0 und 1 liegenden Multiplikationskonstanten (K) bestimmt wird.

7. Verfahren nach Anspruch 6, in dem die Multiplikationskonstante (K) verschiedene Werte in Abhängigkeit von dem mittleren Wert der Differenz (DEk) der kinetischen Energie annimmt.

8. Verfahren nach Anspruch 6, in dem die Multiplikationskonstante (K) zwei verschiene Werte entsprechend einem normalen Gebrauch des Fahrzeugs (1) und einem extremen Gebrauch des Fahrzeugs (1) annehmen kann.

9. Verfahren nach Anspruch 7 oder 8, in dem das Zeitintervall, in dem Mittelwert der Differenz (DEk) der kinetischen Energie des Fahrzeugs (1) zwischen 0,1 und 4 Sekunden liegt.

10. Verfahren nach einem der Ansprüche 1 bis 9, in dem der Gesamtverschleißwert (U) der Bremsscheiben (5) zwischen den vorderen Bremsscheiben (5) und den hinteren Bremsscheiben (5) in Abhängigkeit von einem konstanten Verteilungsverhältnis aufgeteilt ist.

11. Verfahren nach einem der Ansprüche 1 bis 9, in dem der Gesamtverschleißwert (U) der Bremsscheiben (5) einen Gesamtverschleißwert (Ua) der vorderen Bremsscheiben (5) und einen Gesamtverschleißwert (Up) der hinteren Bremsscheiben (5) umfaßt; wobei der momentane Verschleißbeitrag (u) der Bremsscheiben (5) während der Verzögerung zwischen den beiden Gesamtwerten (Ua, Up) in Abhängigkeit eines variablen Verteilungsverhältnisses aufgeteilt wird.

12. Verfahren nach Anspruch 11, in dem das Verteilungsverhältnis bei jeder Verzögerung in Abhängigkeit von den anfänglichen und finalen Geschwindigkeitswerten (V1, V2) der Verzögerung berechnet wird.

13. Verfahren nach einem der Ansprüche 1 bis 12, in dem ein Signal erzeugt wird, wenn der Gesamtverschleißwert (U) der Bremsscheiben (5) eine vorgegebene Schwelle überschreitet.

14. Vorrichtung zum Bestimmen des Verschleißes von Bremsscheiben (5) aus Verbundwerkstoff für ein Straßenfahrzeug (1), wobei die Vorrichtung das in den Ansprüchen 1 bis 13 beanspruchte Verfahren umsetzt.

## Revendications

1. Procédé de détermination de l'usure de disques de frein (5) en matériau composite d'un véhicule routier (1) et comprenant les étapes suivantes consistant à :

   calculer, à chaque décélération du véhicule (1), un différentiel d'énergie cinétique (DEk) du véhicule (1) induit par la décélération ;
   déterminer, en fonction du différentiel d'énergie cinétique (DEk) du véhicule (1), une valeur instantanée (Ed) d'une énergie dissipée par les disques de frein (5) durant la décélération ;
   déterminer une valeur moyenne du différentiel d'énergie cinétique (DEk) du véhicule dans un intervalle de temps donné ;
   déterminer, à chaque décélération du véhicule (1), la température des disques de frein (5) durant la décélération en fonction de la valeur moyenne du différentiel d'énergie cinétique (DEk) ;
   déterminer, sur la base de la valeur (Ed) de l'énergie dissipée par les disques de frein (5) durant la décélération et sur la base de la température déterminée des disques de frein (5) durant la décélération, une contribution à l'usure instantanée (u) des disques de frein (5) durant la décélération ; et
   mettre à jour une valeur d'usure totale (U) des disques de frein (5) en ajoutant la contribution à l'usure instantanée (u) des disques de frein (5) durant la décélération à la valeur d'usure totale précédente (U).

2. Procédé selon la revendication 1, dans lequel, lors de la décélération du véhicule (1), une valeur instantanée correspondante (Ed) de l'énergie dissipée par les disques de frein (5) durant la décélération n'est déterminée que si l'action de freinage du système de frein (4) du véhicule (1) est réellement utilisée durant la décélération.'

3. Procédé selon la revendication 1 ou 2, dans lequel, à chaque décélération, une contribution d'énergie provoquée par l'action de freinage de frottement sur le véhicule (1) est déterminée, la contribution d'énergie provoquée par l'action de freinage de frottement sur le véhicule (1) étant prise en compte pour déterminer la valeur instantanée (Ed) de l'énergie dissipée par les disques de frein (5) durant la décélération en fonction du différentiel d'énergie cinétique (DEk) du véhicule (1).

4. Procédé selon l'une des revendications 1 à 3, dans lequel la détermination de l'estimation de la température des disques de frein (5) durant la décélération comprend l'exécution d'une évaluation de mode de freinage, la contribution à l'usure instantanée (u) des disques de frein (5) durant la décélération étant déterminée sur la base de la valeur (Ed) de l'énergie dissipée par les disques de frein (5) durant la décélération, et sur la base de l'évaluation de mode de freinage en tant qu'indication de l'estimation de la température des disques de frein (5) durant la décélération.

**5.** Procédé selon la revendication 4, dans lequel l'évaluation de mode de freinage est déterminée en fonction de la valeur moyenne du différentiel d'énergie cinétique (DEk).

**6.** Procédé selon l'une des revendications 1 à 5, dans lequel la valeur instantanée (Ed) de l'énergie dissipée par les disques de frein (5) durant la décélération est supposée être égale au différentiel d'énergie cinétique (DEk) du véhicule (1), la contribution à l'usure instantanée (u) des disques de frein (5) durant la décélération étant déterminée en multipliant la valeur (Ed) de l'énergie dissipée par les disques de frein (5) durant la décélération par une constante de multiplication (K) allant de 0 à 1.

**7.** Procédé selon la revendication 6, dans lequel la constante de multiplication (K) prend des valeurs différentes en fonction de la valeur moyenne du différentiel d'énergie cinétique (DEk).

**8.** Procédé selon la revendication 6, dans lequel la constante de multiplication (K) peut prendre deux valeurs différentes correspondant respectivement à une utilisation normale du véhicule (1) et une utilisation extrême du véhicule (1).

**9.** Procédé selon la revendication 7 ou 8, dans lequel l'intervalle de temps dans lequel déterminer la valeur moyenne du différentiel d'énergie cinétique (DEk) du véhicule (1) va de 0,1 à 4 secondes.

**10.** Procédé selon l'une des revendications 1 à 9, dans lequel la valeur d'usure totale (U) des disques de frein (5) est divisée entre les disques de frein avant (5) et les disques de frein arrière (5) en fonction d'un rapport de distribution constant.

**11.** Procédé selon l'une des revendications 1 à 9, dans lequel la valeur d'usure totale (U) des disques de frein (5) comprend une valeur d'usure totale (Ua) des disques de frein avant (5) et une valeur d'usure totale (Up) des disques de frein arrière (5), la contribution à l'usure instantanée (u) des disques de frein (5) durant la décélération étant divisée entre les deux valeurs totales (Ua, Up) en fonction d'un rapport de distribution variable.

**12.** Procédé selon la revendication 11, dans lequel le rapport de distribution est calculé à chaque décélération en fonction des valeurs de vitesses initiale et finale (V1, V2) de la décélération.

**13.** Procédé selon l'une des revendications 1 à 12, dans lequel un signal est généré lorsque la valeur d'usure totale (U) des disques de frein (5) dépasse un seuil donné.

**14.** Dispositif destiné à déterminer l'usure de disques de frein (5) en matériau composite d'un véhicule routier (1), le dispositif mettant en oeuvre le procédé selon les revendications 1 à 13.